# EUROPEAN PATENT APPLICATION

(11) **EP 1 586 893 A1**
(43) Date of publication of application: **19.10.2005**
(21) Application number: 05101149.2
(22) Date of filing: 16.02.2005
(51) Int. Cl.: G01N 27/447

(54) **Microfluidic device with fluid sample shape adaptation**

(71) Applicant: Agilent Technologies Inc, Palo Alto, CA 94303-0870 (US)
(72) Inventor: Bek, Fritz, 76327 Pfinztal (DE); Ruefer, Andreas, 76137 Karlsruhe (DE)
(74) Representative: Barth, Daniel Mathias

(57) **Abstract**

A microfluidic device for analyzing fluid samples (3) is provided. It comprises a channel (1) for conducting the fluid sample (3) having a shape and a detection portion (11) with a detection spot. Due to a transformation of the cross sectional change of said separation channel (1) a geometric adaptation of the shape of the fluid sample to the detection spot is provided.

## Description

### BACKGROUND ART

The present invention relates to microfluidic devices.

One of the most important technologies to analyze DNA, RNA, proteins and cells is the microfluidic lab-on-a-chip technology. It is utilized to process the huge number of different proteins being contained in biological samples.

Said lab-on-a-chip technology is operated by utilizing microfluidic devices, in particular electrophoretic microfluidic devices. The volume of the sample is moved through channels being etched into the chip material, allowing to perform an easy and comfortable sample handling, mixing, diluting, electrophoretic and/or chromatographic separation, staining and detection on single integrated systems. Small volumes of sample have to be processed, thus leading to an economic conduction of the process with respect to sample and reagent consumption.

To carry out protein sizing on a microchip, one may perform sodium dodecyl sulfate-polyacrylamide gel electrophoresis (SDS-PAGE), which is still known as the current standard method. SDS-PAGE can be combined with capillary electrophoresis (CE), thus leading to SDS-CGE.

A suitable capillary for application in capillary electrophoresis is described in US 6,258,238 B1 to Ch. Büttner and W. Beck.

Luc Bousse et al. take into account (Anal. Chem. 2001, 73, 1207 - 1212) that the method of protein sizing on microfabricated analytical devices, comprising the steps of separation, staining, virtual destaining and detection, can be improved in particular with respect to the detection limits. It is suggested to combine on-chip dye staining with a dilution step, more precisely to perform diluting of the SDS concentration below its critical micelle concentration before the detection point, thus reducing background signals remarkably.

### DISCLOSURE OF THE INVENTION

It is an object of the invention to provide an improved detection of proteins. The object is solved by the independent claims. Preferred embodiments are shown by the dependent claims.

Generally, embodiments of the present invention provide an improved detection of proteins in microfluidic electrophoretic devices. The fluid sample containing the proteins is processed in the microfluidic electrophoretic device of the present invention, more precisely, it is processed within a separation channel of said device.

Accordingly, one embodiment of the present invention shows a separation channel of said device, which is designed to provide the necessary reagents and, additionally, which is equipped to provide an electric current adapted to carry the fluid sample from the point of injection to the detection point. An additional electrical current provides dilution of the fluid sample. Due to a change of the cross sectional shape of said separation channel, geometric adaptation of the shape of the sample plug to the detection spot is provided, before the proteins arrive to be detected.

Other embodiments of the present invention refer to some options how to design the cross sectional shape of the separation channel at the point where the fluid sample is entering the detection portion.

Furthermore, a method is provided teaching the processing of fluid samples by use of the embodiments of the device of the present invention.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

FIG. 1a shows a top view of a microfluidic electrophoretic device having a separation channel, with a protein sample being subjected to an electrical field in order to be moved and, additionally, to be diluted while being directed to the detection unit,

FIGS. 1b and 1c show the device of FIG.1a, wherein moving of the plug shaped sample towards the detection unit is in process,

FIG. 1d shows the device of FIG.1a, wherein one plug shaped sample has been subjected to dilution, thus has become elongated,

FIG. 1e shows the device of FIG.1a, wherein two samples having a elongated geometry move towards the detection unit,

FIG. 1f shows the device of FIG.1a inclusive the portion of the separation channel where detection of the sample takes place,

FIGS. 1g and 1h show the different cross sectional shapes of the detection channel in the first portion and the detection portion,

FIG.2 shows the step of detection being performed in a conventional channel; the geometry of the sample not being adapted to the geometry of the detection spot.

Before the embodiments of the invention are described in detail, it is to be understood that this invention is not limited to the particular component parts of the devices described or to process steps of the methods described, as such devices and methods may vary. It is also to be understood, that the terminology used herein is for purposes describing particular embodiments only and it is not intended to be limiting. It must be noted that, as used in the specification and the appended claims, the singular forms of "a", "an", and "the" include plural referents until the context clearly dictates otherwise. Thus, for example, the reference to "a separation channel" or "a current source" may include two or more such separation channels or current sources, if it is reasonably in the sense of the present invention.

Features that are substantially or functionally equal or similar will be referred to in the accompanying figures with the same reference numerals.

The technology of protein sizing is in modern lab technology performed by utilizing a lab-on-a-chip, utilizing a network of channels and wells onto the chip material, allowing to perform processing of fluid samples and reagents in an almost completely automated workflow.

The embodiments of the present invention refer in particular to the detection of proteins after a number of preparation steps has been performed, whereby performance of the method of the present invention requires utilizing of a device which is designed as described in the following.

In a first step the proteins need to be denatured and charged according to their mass, which is done by adding SDS to the proteins. SDS forms micelles with the proteins, the micelles preventing refolding of the denatured proteins. These micelles consist of the protein and negatively charged dodecylsulfate ions bound by hydrophobic interaction. The proteins have to be denatured and charged before they can be moved by application of an electrical field.

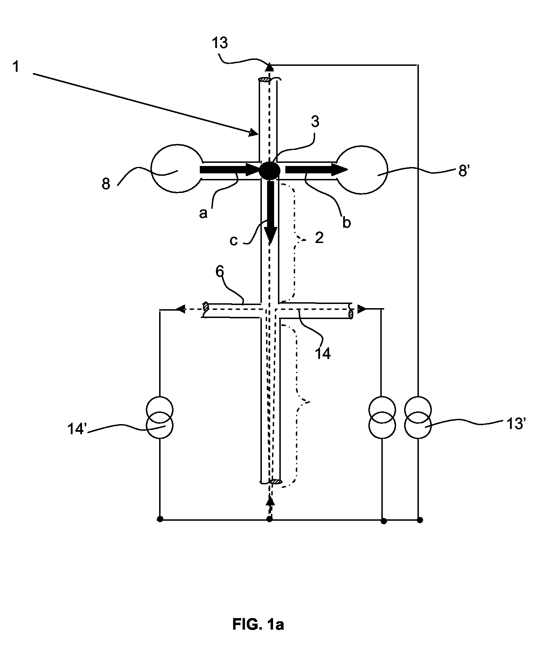

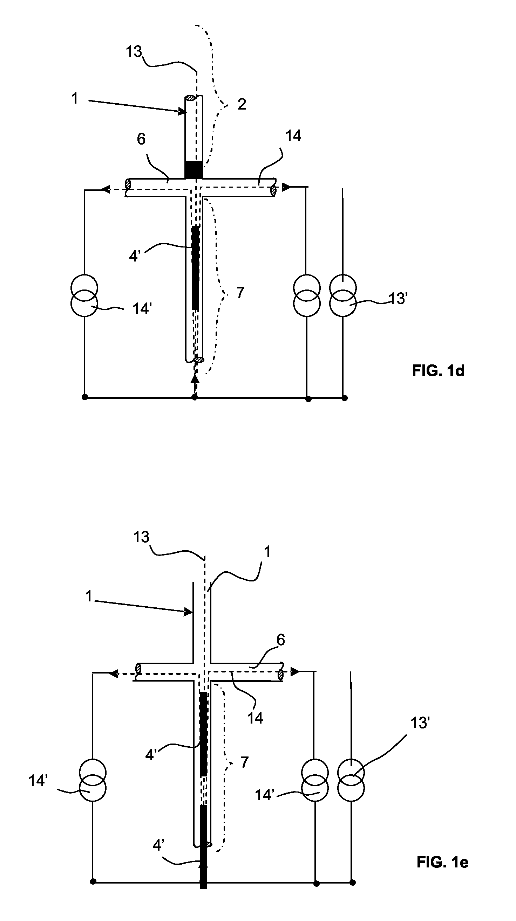

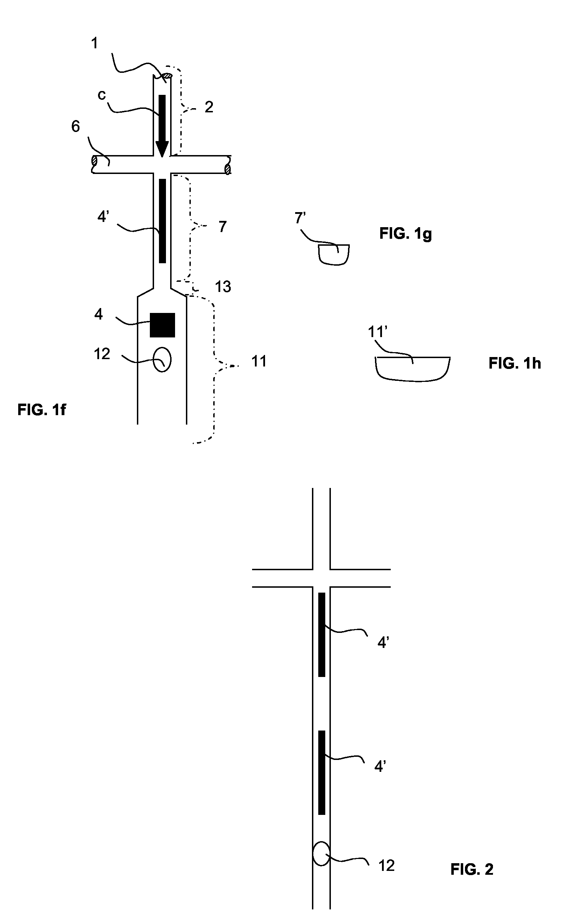

The protein containing fluid sample 3 is injected into a separation channel 1 of the electrophoretic microfluidic device by passing an injection port 8, as depicted in **FIG 1a.** As indicated by the arrow a, the fluid sample 3 is directed through a side channel from the injection port to the separation channel 1, where its is subjected to an electric current 13, adapted for moving it along the separation channel 1 to the detection spot. The electric current 13 is generated by a current source 13'.

Due to the geometric design of the channel and due to electrical forces acting onto the fluid sample 3 it becomes "plug" or "plume" shaped, with the mean free particle path between two proteins within the plume or plug being rather short. The rest of the injected sample volume can be immediately directed (see arrow b) into another side channel to a waste deposit 8', whereas the injected plug is led through the separation portion 2 of the separation channel 1, as indicated by the arrow c, in order to be subjected to separation. The processing of the protein containing fluid sample 3 continues within the separation channel 1 as follows:

Separation of the proteins is provided by performing a second step, which herein comprises gel electrophoresis. The gel is provided within the separation portion 2 of the separation channel 1. It contains dye in order to stain the denatured proteins and, additionally, SDS. Since the dye molecules form micelles with SDS as well as the proteins do, the concentration of SDS must exceed the critical micelle concentration (CMC) in order to maintain the state of denaturing of the proteins.

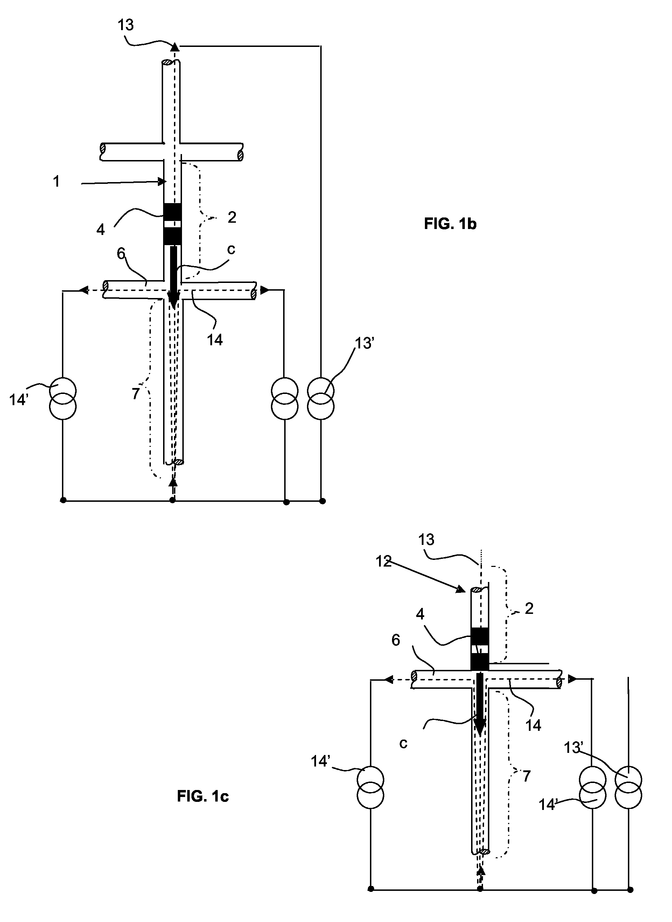

Moving of the sample plug 4 along the separation portion 2 towards the dilution portion 7 is shown in **FIGS. 1b** and **1c.**

A third step is performed within the dilution portion 7, which is shown clearly in **FIG. 1d** and which begins where the separation portion 2 ends, so where the side channels 6 are merging into the separation channel 1. Said step is the so-called destain step, dilution of the SDS-containing solution is performed until the SDS concentration falls below the CMC, whereby the micelles merely containing dye molecules break apart whereas the protein containing micelles remain intact. The unbound dye molecules in solution show a decreased fluorescence in comparison to bound dye molecules, thus the destain step leads to reduction of the background signal during detection.

Herein, dilution is performed electrically, as is depicted closely by **FIGs. 1a** to **1e.** By applying a dilution current on the plug shaped sample 4 the electrical field which acts upon the fluid sample 3 is multiplied, and the flow velocity of the sample is increased. This is accordingly leading to a larger mean free path between the particles of the fluid sample 3, whereby a dilution effect is obtained, resulting in "elongating" of the sample shape.

Said dilution current is generated by superimposing two additional electric currents 14, which are provided by the current sources 14', to the electric current 13, which is described above and which is only meant to move the fluid sample 3. The additional electric currents 14 are conducted through the side channels 6, being added within the dilution portion 7 to the electric current 13, thus resulting in an increased electrical field.

Due to the side currents the field strength is a definite factor higher than upstream the "destain cross", which is the junction where the side channels merge into the separation channel. When a sample molecule reaches the dilution portion, coming from the separation portion 2, it becomes accelerated to a speed which is increased by said factor.

Of course, other embodiments can comprise a plurality of current sources, which can be operated independent from each other or which may be coupled, if desired.

Any embodiment of the device of the present invention can be operated with voltage sources as well as with current sources, it must be taken into consideration that choosing voltage sources requires voltage controlling with respect to the desired electric current flow, which depends on the conductivity of the substance which is contained within a separation channel.

Generally, the current sources or voltage sources, respectively, need to have a common reference point since both currents and applied voltages are referenced with respect to a common ground zero.

Furthermore, in other embodiments the side channels can be joined with each other, requiring only one current source to provide both branches of the channel with current then.

After having been diluted, the sample plume 4 - having an elongated shape now - is carried to the detection portion 11, which is provided downstream from the dilution portion 7 of the separation channel 1. In order to allow optical detection such as laser induced fluorescence (LIF) of a protein containing sample, the sample carrying channel must be at least unidirectional optically transparent in order to permit passage of a light beam, or "detection spot", respectively. Accordingly at least one detection window 12 has to be provided, as shown in **FIGs. 1f and 2**. For bi-directional optical transparency one can propose two detection windows or a peripheral detection window.

The detection spot is usually shaped circular or oval, corresponding with the cross sectional shape of the light beam which is directed on the sample to perform optical detection. If the sample shape remains elongated, as shown in FIG. 2, the detection spot which passes the detection window detects only a partial quantity of the proteins while they are passing the detection portion.

Accordingly, it's desirable to re-shape or transform the shape of the plume or plug, when it enters the detection portion 11, performing a compacted plume shape again. This can be achieved by providing a change of the separation channels 1 cross section at the point where the dilution portion 7 merges into the detection portion 11; the portion of merging itself may form a transformation portion 13 then, as depicted in **FIG. 1f.**

By changing the first cross sectional shape 7' into the second cross sectional shape 11', which has herein a larger area than the first cross sectional shape 7', the electrical current density is reduced immediately and a decrease in field strength takes place. The molecules are slowed down which gives a longitudinal compression but their width respective depth is enlarged leaving the concentration unchanged. An effect reverse to that of the dilution current is achieved, but without reversing the effect of the destain step, whereby the micelles solely containing dye molecules have broken apart due to dilution.

The effect of reformatting the shape of elongated sample plug 4 may as well be obtained by making the detection portion of the separation channel 1 deeper or wider and deeper in comparison to the upstream channel. Any embodiment of the present invention is aiming to provide a geometric adaptation of the shape of the sample plug 4 to the cross sectional area of the incident detection spot, thus maximizing the number of proteins comprised by the sample to be detected.

Of course, a microfluidic electrophoresis device can be equipped with a plurality of separation channels 1, which may be arranged parallel to each other on the chip or in any arrangement which is reasonable in the sense of the present invention.

It may be furthermore reasonable in other embodiments of the present invention to provide more than two side channels per separation channel to design the electrical field or fields in the desired manner.

## Claims

1. A microfluidic device for analyzing fluid samples (3), comprising:
- a channel (1) for conducting the fluid sample (3),
- a detection portion (11) having a detection spot,
wherein a transformation of a shape of the fluid sample (3) is provided by a cross sectional change of said channel (1) by a geometric adaptation of the shape of the fluid sample to the detection spot.

2. The microfluidic device of claim 1, wherein a dilution current is provided, adapted for dilution of the fluid sample (3).

3. The microfluidic device of claim 1 or any one of the above claims,
wherein a side channel (6) is comprised, adapted to conduct the electric current for dilution.

4. The microfluidic device of claim 1 or any one of the above claims,
wherein the cross sectional change of said separation channel (1) is provided by a dilution portion (7) having a first cross sectional shape (7') downstream from the side channel (6), being transformed into a second cross sectional shape (11') of said separation channel (1), downstream from the side channel (6), too, whereby a transformation portion (13) of said separation channel (1) is provided.

5. The microfluidic device of claim 1 or any one of the above claims, comprising at least one of the features:
the detection portion (11) is provided downstream from the dilution portion (7) of the separation channel (1), with the detection portion (11) comprising a detection window (12);
the second cross sectional shape (11') of said detection portion (11) of the separation channel (1) has a larger width and/or a larger depth with respect to the first cross sectional shape (7') of said dilution portion (7) of the separation channel (1).

6. The microfluidic device of claim 1 or any one of the above claims,
wherein at least one first current source is comprised, generating at least one first electric current (13) adapted for moving the sample plug (4) along the separation channel (1), and wherein the dilution current for dilution of the sample plug (4) is provided by at last one second current source generating at least one second electric current (14).

7. The microfluidic device of claim 1 or any one of the above claims, comprising at least one of the features:
said dilution current is provided by superimposition of the at least one first electric current (13) and of at least one second electric current (14);
the separation channel (1) comprises at least one of an injection port (8) for injecting the fluid sample (3) and a waste deposit (8') for deposition of waste fluid;
a plurality of separation channels (1) and/or a plurality of side channels (6) per separation channel (1) is provided, wherein the plurality of separation channels (1) is arranged coplanar, preferably in parallel to each other;
said microfluidic device is a microfluidic electrophoresis device;
said shape of the fluid sample (3) is a plug shape (4).

8. A method for analyzing fluid samples, comprising the steps of:
- introducing a fluid sample into a separation channel of a microfluidic electrophoresis device, in particular into the separation channel (1) of the microfluidic device according to claim 1 or any one of the above claims,
- carrying the fluid sample (3) having a shape through the separation channel (1) to the detection portion (11), comprising the detection spot,
- transforming said shape of the fluid sample (3) by subjecting it to the cross sectional change of said separation channel (1), whereby a geometric adaptation of the shape of the fluid sample to the detection spot is provided.

9. Method according to the preceding, comprising the steps of:
- diluting said fluid sample (3), which forms a sample plug (4), by subjecting it to said dilution current, thus resulting in plug-elongating within the separation channel (1),
- carrying the elongated shape of the sample plug (4) to the detection portion (11) which is provided downstream from the dilution portion (7) of said separation channel (1) and which comprises said detection spot,
- subjecting said elongated sample plug (4) to the cross sectional change of said separation channel (1), whereby said geometric adaptation is provided.

10. Method according to claim 8 claim or any one of the above claims, comprising the steps of:
- operating the at least one first current source (13') for generating the first electric current (13),
- applying said first electric current (13) for carrying the fluid sample (3) along the separation channel (1),
- operating the at least one second current source (14') for generating the second electric current (14),
- superimposing said first electric current (13) and said second electric current (14) for providing said dilution current.
